(19) Europäisches Patentamt / European Patent Office / Office européen des brevets

(11) **EP 2 095 583 B1**

(12) **EUROPEAN PATENT SPECIFICATION**

(45) Date of publication and mention
of the grant of the patent:
**14.08.2013  Bulletin 2013/33**

(21) Application number: **07869286.0**

(22) Date of filing: **14.12.2007**

(51) Int Cl.:
*H04L 12/933* (2013.01)     *H04L 12/931* (2013.01)

(86) International application number:
**PCT/US2007/087604**

(87) International publication number:
**WO 2008/079744 (03.07.2008 Gazette 2008/27)**

(54) **MATRIX EXPANSION LATTICE**

MATRIXEXPANSIONSGITTER

GRILLE D'EXPANSION DE MATRICE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.12.2006  US 870721 P**
**20.12.2006  US 871100 P**
**20.12.2006  US 871103 P**
**04.12.2007  US 950230**
**04.12.2007  US 950272**
**04.12.2007  US 950253**

(43) Date of publication of application:
**02.09.2009  Bulletin 2009/36**

(73) Proprietors:
• **Wilson, Kevin**
**Mclean, VA 22102 (US)**
• **Nguyen, Ninh**
**Mclean, VA 22102 (US)**

(72) Inventors:
• **Wilson, Kevin**
**Mclean, VA 22102 (US)**
• **Nguyen, Ninh**
**Mclean, VA 22102 (US)**

(74) Representative: **Cordina, Kevin John et al**
**Olswang LLP**
**90 High Holborn**
**London WC1V 6XX (GB)**

(56) References cited:
US-A- 3 582 560     US-A- 3 582 560
US-A- 4 983 961     US-A- 4 983 961

US-A1- 2005 157 713     US-A1- 2005 157 713
US-A1- 2006 126 610     US-A1- 2006 126 610
US-B1- 6 696 917        US-B1- 6 696 917

• JOHN KIM ET AL: "Adaptive Routing in High-Radix Clos Network", SUPERCOMPUTING, 2006. SC '06. PROCEEDINGS OF THE ACM/IEEE SC 2006 CONFERENCE, IEEE, PI, 1 November 2006 (2006-11-01), pages 7-7, XP031044199, ISBN: 978-0-7695-2700-0
• YUANYUAN YANG ET AL: "Wide-sense nonblocking Clos networks under packing strategy", PARALLEL PROCESSING SYMPOSIUM, 1997. PROCEEDINGS., ILTH INTERNATIONAL GENVA, SWITZERLAND 1-5 APRIL 1997, LOS ALAMITOS, CA, USA,IEEE COMPUT. SOC, US, 1 April 1997 (1997-04-01), pages 45-54, XP010216760, DOI: DOI: 10.1109/IPPS.1997.580844 ISBN: 978-0-8186-7793-9
• JAJSZCZYK: "50 Years of Clos Networks A Survey of Research Issues", HPSR,, 1 January 2003 (2003-01-01), XP008109869,
• KIM ET AL.: 'Adaptive Routing in High-Radix Clos Network', [Online] November 2006, XP031044199 Retrieved from the Internet: <URL:http://www.cva.stanford.edu/publicatio ns/2006/SC_adaptive.pdf>
• YANG ET AL.: 'Wide-Sense Nonblocking Clos Networks under Packing Strategy', [Online] 1997, XP010216760 Retrieved from the Internet: <URL: http://www.ipdps.cc.gatech.edu/1997/s2 /112.pdf>

EP 2 095 583 B1

**(Cont. next page)**

• JAJSZCZYK: '50 Years of Clos Networks A Survey of Research Issues' HPSR, [Online] 2003, XP008109869 Retrieved from the Internet: <URL: http://www.tic-networks.polito.it/HPSR 2003/talks/Clos_HPSR_AJ.pdf>

• JAJSZCZYK: '50 Years of Clos Networks A Survey of Research Issues' HPSR, [Online] 2003, XP008109869 Retrieved from the Internet: <URL: http://www.tic-networks.polito.it/HPSR 2003/talks/Clos_HPSR_AJ.pdf>

## Description

FIELD OF INVENTION

The present invention relates in general to telecommunications switching systems and more particularly to a large, efficient and cost effective cross-connect switching architecture.

BACKGROUND OF THE INVENTION

Digital cross-connect systems are an integral part of today's modem telecommunications transport network. They are increasingly used by all service providers including exchange carriers, long distance carriers, and competitive by-pass carriers. Significant technology advancements have allowed digital cross-connect systems to evolve from narrowband grooming and test applications to cross-connect of larger network signals in wideband and broadband frequency domains.

A broadband system is typically used to terminate high speed SONET optical and electrical signals in order to path terminate and groom lower speed broadband signals. The broadband system also supports performance monitoring and test access functions. Typical broadband cross-connect systems use either single stage or three stage Clos matrix architecture. In the three stage matrix architecture, the cross-connect includes switches grouped into an originating stage, a center stage, and a terminating stage. The three stage matrix architecture is best suited for maximum capacity applications for cross-connecting a large volume of signals. The single stage matrix architecture organizes the single stage matrices in rows and columns, which results in a higher number of switches than the three stage architecture.

The paper "Adaptive Routing in High-Radix Clos Network", John Kim et al, November 2006, XP031044199 dislcoses a adaptive routing techniques in Clos networks to reduce latency and reduce variance in packet latency,

SUMMARY

While the Clos three stage architecture has been a staple of high capacity cross-connect arrays, the inventors have recognized a need for even higher capacity arrays. Embodiments configured according to invention facilitate providing such capacity.

There is provided a switching array comprising: (a) a plurality of three stage switching arrays; and (b) an expansion switching array, wherein a second stage of each of the three stage switching arrays includes an expansion section comprising switches which facilitate interconnection of each three stage array to the expansion switching array; (c) wherein each of the plurality of three stage switching arrays comprises a first stage array having N inputs and K outputs and a third stage array having K inputs and N outputs, each second stage array of each three stage switching array receiving M local inputs from the first stage array and providing M local outputs to the third stage switching array, each second stage switching array further providing P outputs to the expansion array and receiving P inputs from the expansion array, where K, N, M and P are integers; and (d) wherein the switching array comprises a plurality of nodes and wherein, in each node, there are K second stage arrays, M first stage arrays, and M third stage arrays, and wherein the number of expansion switching arrays in the expansion array is equal to K × P.

A selection of optional features of the claims are set out in the dependent claims.

DESCRIPTION OF DRAWINGS

Fig. 1 is a schematic diagram of a switching array according to an illustrative embodiment.

Fig. 2 is a schematic diagram of an array of switch identifiers according to an illustrative embodiment.

Fig. 3 is a block diagram of a computer processor and associated memory according to an illustrative embodiment.

Fig. 4 is a flow diagram of a switch selection process employing the illustrative embodiment.

Figs. 5 and 6 comprise a schematic circuit diagram of an array of 32 switches according to an illustrative embodiment.

Figs. 7 and 8 are circuit diagrams of driver circuits for driving switches such as those disclosed in Figs. 5 and 6.

Fig. 9 is an enlarged view of one of the switches of the array shown in Figs. 5 and 6.

Figs. 10 and 11 are waveform diagrams useful in illustrating a method for driving switches of the array of Figs. 1 and 2 with a reduced number of drivers.

DETAILED DESCRIPTION

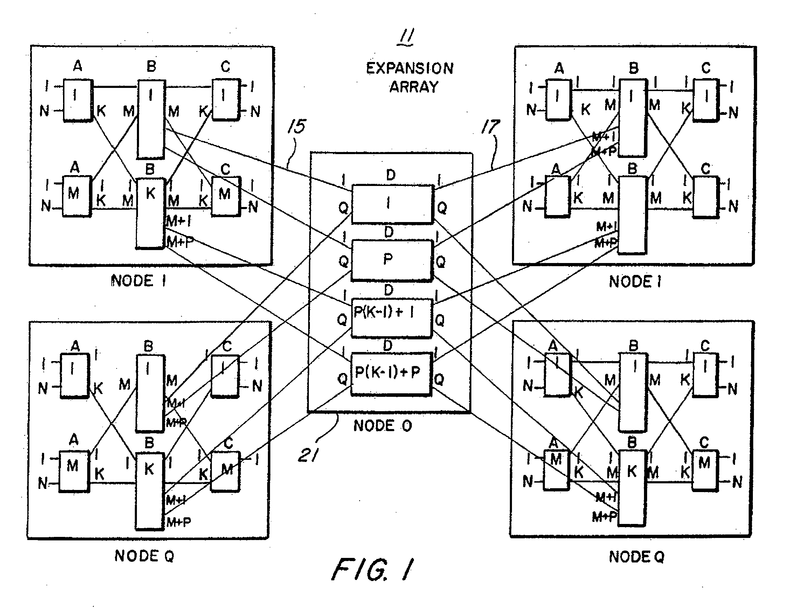

Fig. 1 illustrates a switching array network 11 according to an illustrative embodiment. The system 11 of Fig. 1 is a relatively large system comprising a plurality of Nodes 1... Q and an Expansion Array 21 also identified as Node 0. In Fig. 1, each of the nodes e.g. Node 1, is drawn twice, once at the left of Expansion Array 21 and once to the right of the Array 21. This depiction is employed so that the interconnections, e.g. 15, 17, to the Expansion Array from the left and right side of the "B" arrays in each of the nodes do not overlap other portions of the drawing and are therefore more clearly shown.

Each of the Nodes 1... Q have a common three stage structure formed of A, B, and C switching arrays, interconnected as shown. The Expansion Array comprises a column of "D" switching arrays. The A, B, C and D arrays are defined as follows:

An array of type A has N inputs and $K$ outputs.

An array of type B has $M+P$ inputs and $M+P$ outputs.

An array of type C has $K$ inputs and $N$ outputs.

An array of type D has $Q$ inputs and $Q$ outputs.

Further with respect to the topology of Fig. 1, it may be observed that Node *1* through *Q* has only arrays of type A, B and C, while Node *0* has only arrays of type D. As to the number of arrays, there are *M* arrays of type A in each of node *1* thru node *Q*, there are *K* arrays of type B in each of Node *1* thru Node *Q*, there are *M* arrays of type C in each of node *1* thru node *Q*, and there are *R* arrays of type D in Node *0* where $R = KXP$. The various arrays may be identified as follows:

> $A_{(m)}$ denotes a type A array *m* in node *q where m = 1 .. M*; and *q = 1 .. Q*.
> $B_{(k)}$ denotes a type B array *k* in node *q* where *k = 1.. K;* and *q = 1.. Q*.
> $C_{(m)}$ denotes a type C array *m* in node *q* where *m = I .. M; and q = 1 Q*.
> $D_{(r)}$ denotes a type D array *r* in node *0* where *r = P (k-1)+p;k = 1.. K; p = 1 .. P*.

The interconnection of the respective A, B, C and D arrays are defined as follows:

> 1. Output k of array A(*m*) in node q connects to input *m* of array B$_{(k)}$ in the same node *q*, where *m = 1 M and k = 1 .. K*.
>
> 2. Output *m* of array B$_{(k)}$ in node *q* connects to input *k* of array C(*m*) in the same node *q*, where *m =1.. M* and *k = 1.. K*.
>
> 3. Output *M+p* of array B$_{(k)}$ in Node *q* connects to input *q* of array D(r=P(k-1)+p) in Node *0*, where *p = 1.. P; k = 1.. K;* and *q = 1 .. Q*.
>
> 4. Output *q* of array D(r=P(k-l)+p) in Node *0* connects to input *M+p* of array B$_{(k)}$ in Node *q*, where *q = 1.. Q; k = 1.. K;* and *p = 1 .. P*.

Thus, it will be observed that outputs *M+1 ... M+p* on each left Node B array and inputs *M+1... M+p* on each right Node B array facilitate implementation of the Expansion Array's type D arrays.

In the switching array of Fig. 1, a switch is a device that may be activated to connect one input to one output of the same array. Each switch is represented by the notation $S_{(node,\ array\ type,\ array\ number,\ input,\ output)}$. For example, S$_{(l, A, 2, 1, 3)}$ denotes the switch that connects input *1* to output *3* of type A array *2* in node *1*; S$_{(0,D, 3, 2, 5)}$ denotes the switch that bridges input *2* with output *5* of the type D array *3* in node *0*.

Employing the switch notation convention just discussed, the switches of the A, B, C and D arrays are identified as follows:

> 1. The switch that connects input *x* to output *k* of the type A array *m* in node *q* is identified by *S(q,A,m,x; k)*, where *q = 1 .. Q; m = 1.. M; x = 1.. N; k = I .. K*.

> 2. The switch that connects input *m* to output *n* of the type B array *k* in node *q* is identified by $S_{(q,B,k,m,n)}$, where *q = 1.. Q; k = 1.. K; m = 1 .. M; n = 1 .. M*.
>
> 3. The switch that connects input *k* to output y of the type C array *m* in node q is identified by $S_{(q,C,m,k,y)}$, where *q = 1.. Q; m = 1 .. M; k = 1.. K; y = 1 .. N*.
>
> 4. The switch that connects input *p* to output *t* of the type D array *r* in node *0* is identified by $S_{(0, D,r,p,t)}$, where *r = 1.. P(k-1)+p; p = 1 P; t = 1 .. P*.

Moreover, in the illustrative embodiment of Fig. 1 under discussion, an input of a type A array is also viewed as an input of the network. An output of a type C array is also viewed as an output of the network. The path (continuity) between one network input and one network output (one input of a type A array and one output of a type C array) can be established by serially connecting five switches (S1, S2, S3, S4 and S5) where S1 is a switch that connects an input and output of the 1st array of type A; S2 is a switch that connects an input and output of the 2nd array of type B; S3 is a switch that connects an input and output of the 3rd array of type D; S4 is a switch that connects an input and output of the 4th array of type B; and S5 is a switch that connects input and output of the 5th (last) array of type C.

As may be appreciated, more than one possible path (more than one set of switches (S1, S2, S3, S4, S5)) exists between any two I/O points in the network. In the illustrative embodiment, the following procedure is used to determine all possible paths (S1, S2, S3, S4, S5) between two I/O points in the network.

First, the following constants are defined:

> Q = number of I/O nodes in the network
> N = number of inputs on each type A array
> N = also number of outputs on each type C array
> K = number of outputs on each type A array
> K = also number of inputs on each type C array
> M = number of local inputs (from type A array) on each type B array
> M = also number of local outputs (to type C array) on each type B array
> P = number of foreign inputs (from type D array) on each type B array
> P = number of foreign outputs (to type D array) on each type B array

Next, for a port (*X=1 ..(N x Mx Q))*, and for (k = 1 .. K), a series of values for variables q, m and *n* are defined as follows:

> $q = int(X/(N \times M \times Q)) + 1$
> $m = int(X/(N \times Mx\ q)) + 1$
> $n = X- int(X/(q \times m \times M) \times N$

In such case, the set of all switches S1, S2, S3, S4, S5 available for interconnecting a selected port "X" with a selected port "Y" within the same Node is determined as follows for (t = 1 .. M) and for a port (Y = 1 .. N):

$$S1 = S_{(q,A,m,n,k)} \qquad \text{(Equation 1)}$$

$$S2 = S_{(q,B,k,m,t)} \qquad \text{(Equation 2)}$$

$$S3 = S_{(0,D,0,0,0)} \qquad \text{(Equation 3)}$$

$$S4 = S_{(q,B,k,m,t)} \qquad \text{(Equation 4)}$$

$$S5 = S_{(q,C,t,k,Y)} \qquad \text{(Equation 5)}$$

and the set of switches S1, S2, S3, S4, S5 for connecting a port "X" in one Node with a port "Y" in a different Node is determined as follows for (t = 1.. .. P), for (h = 1 .. K) and for a port (y=1..N):

$$S1 = S_{(q,A,m,n,k)} \qquad \text{(Equation 6)}$$

$$S2 = S_{(q,B,k,m,t)} \qquad \text{(Equation 7)}$$

$$S3 = S_{(0,D,P(k-1)+t,q,w)} \qquad \text{(Equation 8)}$$

$$S4 = S_{(w,B,k,t,h)} \qquad \text{(Equation 9)}$$

$$S5 = S_{(w,C,h,k,Y)} \qquad \text{(Equation 10)}$$

As those skilled in the art will appreciate, a key task in a system such as that illustrated in Fig. 1 is to select the appropriate switches in the Nodes I... Q and the Expansion Array 21 to complete a desired cross-connect. For example, if it is desired to connect port "1" ("X" Port) of the A array in Node 1 to port "1" ("Y" Port) of the C array in Node 1, appropriate switches in Node 1 (and no switches in Expansion Array 21) must be selected and closed to create the desired signal path. Thus, as noted above, a "path" may comprise a group or set of switches which serially interlink a desired pair of ports ("X" and "Y") through the hardware system.

One approach to accomplishing the switch selection and interconnection task just discussed would be to employ software to determine the appropriate group of switches in real time during operation of the switching array of Fig. 1. This approach creates tremendous software overhead and complexity. According to the preferred embodiment, this approach is avoided by employing software to first create an array of switch identifiers based on the specific, known switching system architecture, which greatly simplifies selection of appropriate switches to create a desired path during real time operation of a deployed system. Thus, such a switch identifier array is preferably determined and stored in the system as part of the system manufacturing process prior to deployment of the system at an end user site. A relatively straight forward indexing operation may then be used to determine those switches which may be closed to achieve a desired interconnection.

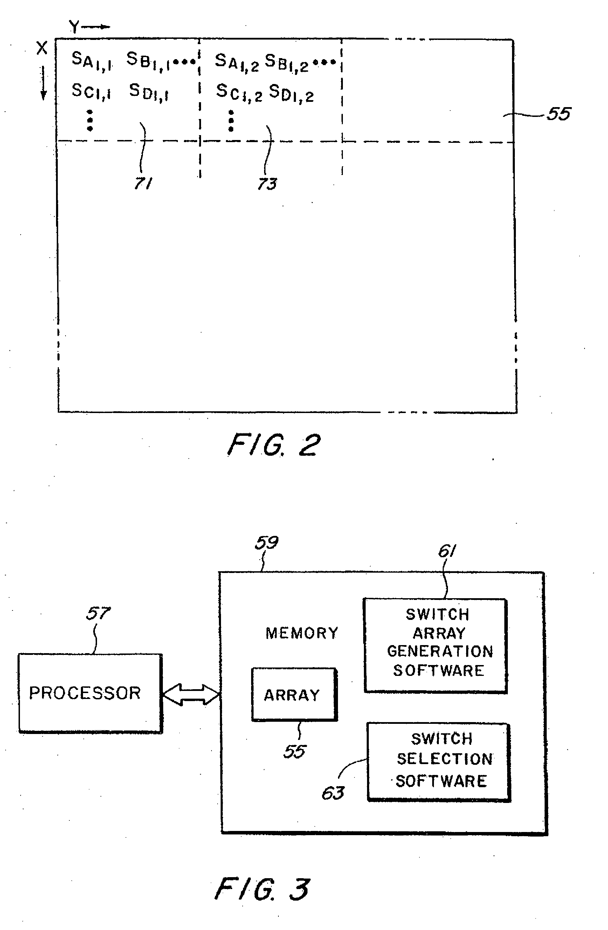

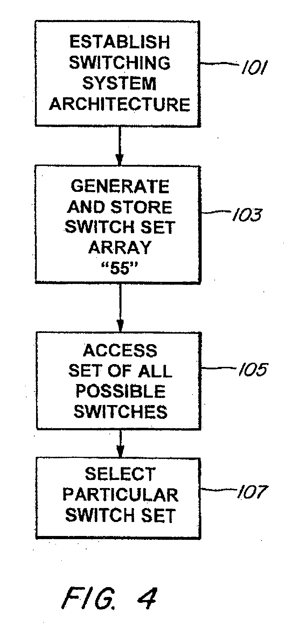

More particularly, in the illustrative embodiment depicted in Figs. 2 and 3, and as shown in Fig. 4, after the switching system architecture is established (step 101), software 61 running on a computer processor 57 generates an array 55 of switch identifiers (step 103), and stores the array 55 in memory 59. As shown in Fig. 2, the array 55 is divided into subarrays, e.g. 71, 73. Each sub-array contains all sets of switches S1, S2, S3, S4, S5 which are capable of connecting a selected "X" Port to a selected "Y" Port. For example, all switch sets $S_{A(1,1)}... S_{N(1,1)}$ for connecting "X" Port 1 to "Y" Port 1 are stored in sub-array 71, while all switch sets $S_{A(1,2)}... S_{N(1,2)}$ for connecting "X" Port 1 with "Y" Port 2 are stored in sub-array 73, and so forth. Each sub-array is determined by software program steps of software 61, which may, for example, compute either equations 1-5 or equations 6-10 above for the particular port pair (X,Y,) in question. Such software may be written, for example, in C++, or any other suitable language.

Once the array of Fig. 2 has been generated, for example, prior to shipping and deployment of a switching array such as that shown in Fig. 1, the switch selection software 63, which actually selects a particular switch set (such as switch set $S_{A1,1}$) to establish connection between a pair of ports (such as ports 1,1), need only employ an index (e.g. "1,1") during real time operation to access the set 71 of all possible switches for establishing a particular port-to-port connection (step 105, Fig. 4). Thereafter, in step 107 of Fig. 4, for example, the switch selection software may perform a particular switch selection procedure employing various criteria, such as those known to those skilled in the art, for selecting a particular pair of switches from those which are available.

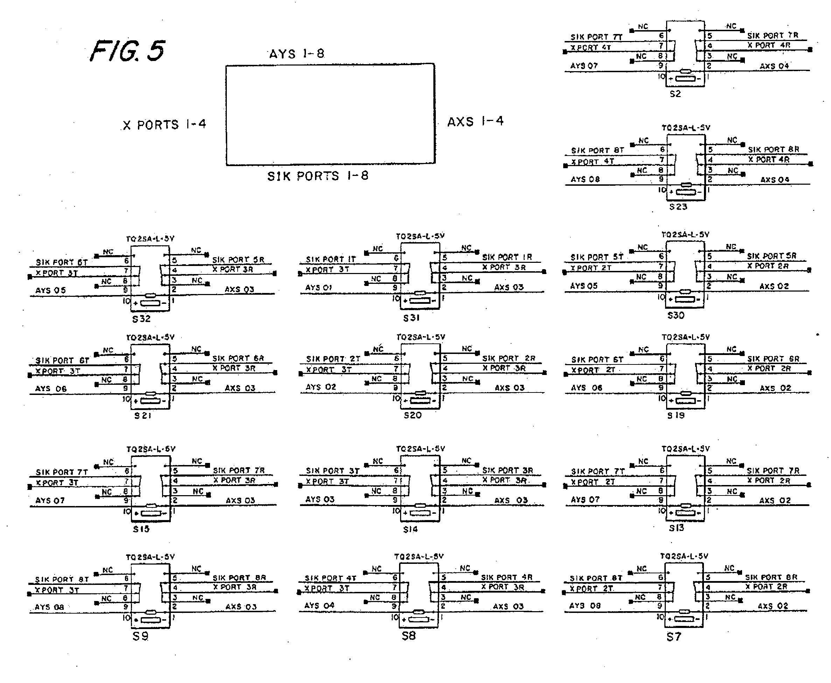

Implementation of a cross-connect switching architecture such as that shown in Fig. 1 may be enhanced in certain embodiments by implementing a switching device activation approach which allows the elimination of a number of discrete drivers by counter driving the coils of parasitic EM devices with pulse modulated electromotive force (EMF) to counteract the sympathetic switching of nearby devices. According to an illustrative embodiment, the EMF duty cycle and polarity applied to the parasitic paths is determined by the tolerance of switching EMF and the proximity of the sympathetic EM device to the targeted device within a matrix array. The result is that the EM devices in the parasitic paths are not switched for either possible initial state and the total number of drivers required for large arrays of EM devices such as, for example, relays and solenoids, is greatly reduced. Implementation of the foregoing approach is illustrated in connection with Figs. 5-11.

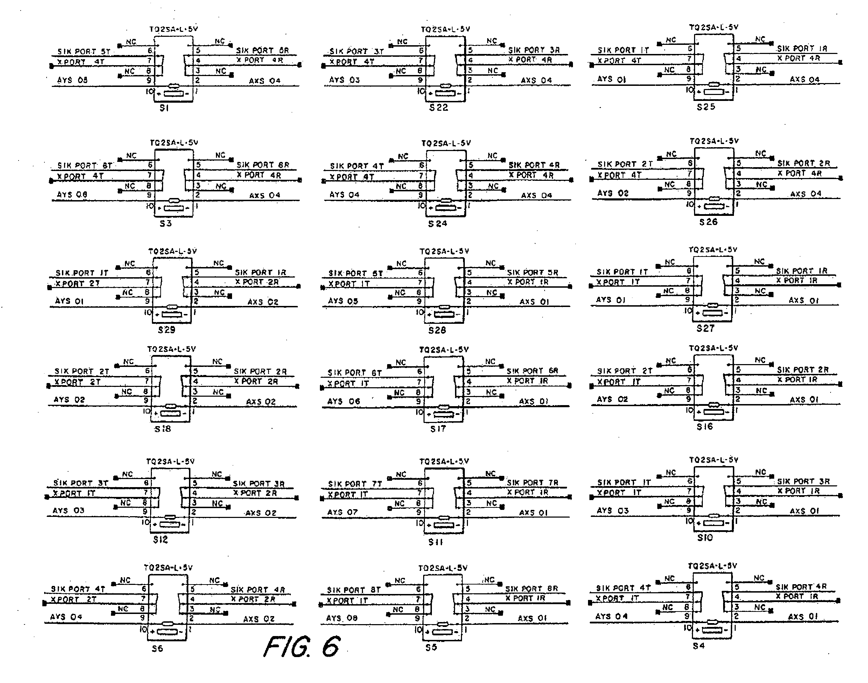

Figs. 5 and 6 depict an array of 32 switching devices $S_1$, $S_2$, $S_3$... $S_{32}$. The particular switching devices depicted are cantilever MEMS switches, but could be other types of switches or relays in other embodiments.

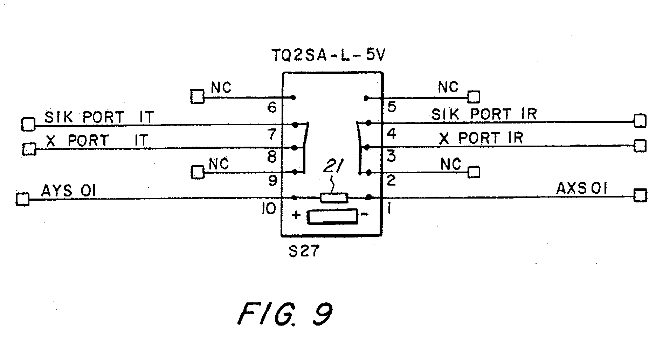

Each of the switches $S_1$... $S_{32}$ includes an activation coil (e.g. 21 in Fig. 9), having positive ("Y") and negative ("X") terminals. According to the illustrative embodiment, eight positive terminal drivers and four negative terminal drivers suffice to switch ("close") any selected one of the 32 switching devices $S_1$... $S_{32}$. The eight positive drivers produce respective drive signals, AYS_01, AYS_02, AYS_03 ... AYS_08; while the four negative drivers produce four respective drive signals AXS_01, AXS_02, AXS_03 and AXS_04.

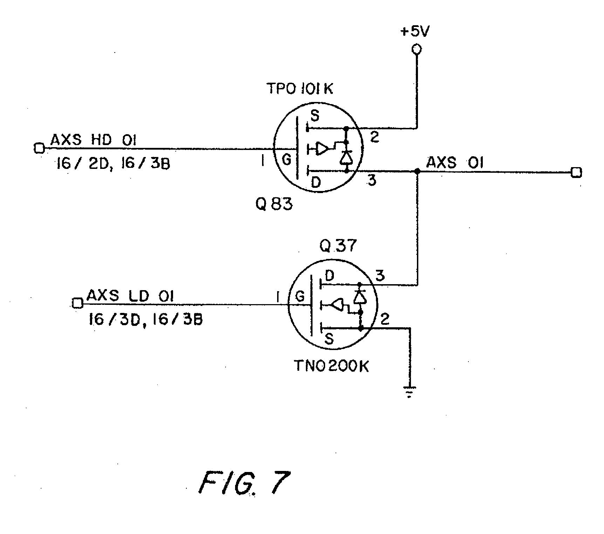

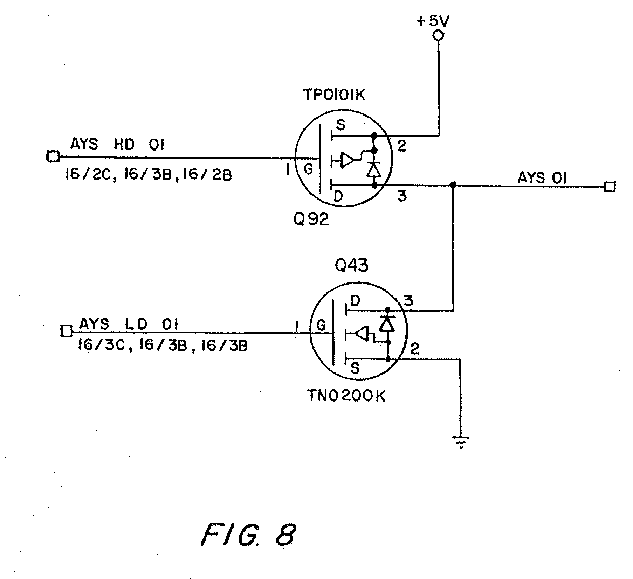

Fig. 7 and 8 depict a driver circuit for generating drive signals AXS_01 and AYS_01, respectively. These driver circuits may be conventional MOSFET drivers. The driver of Fig. 3 is triggered by gate signals AXS_HD_01 and AXS_LD_01, while that of Fig. 4 is triggered by gates signals AYS_HD_01 and AYS_LD_01.

A specific MEMS switching device $S_{27}$ is shown enlarged in Fig. 9. It may be seen that the coil 21 of this device $S_{27}$ is driven by drive signals AYS_01 and AXS_01. Pins 7 and 4 are "signal-in" pins and pins 8 and 3 are "signal returns," respectively. The temporary magnetic field created by an energy pulse to the coil 21 starts the respective cantilever $S_{23}$, $S_{24}$ to pull and close the respective signal paths. The cantilevers 23, 24 are held in place by a fixed magnet after the activation pulse to the coil 21 terminates.

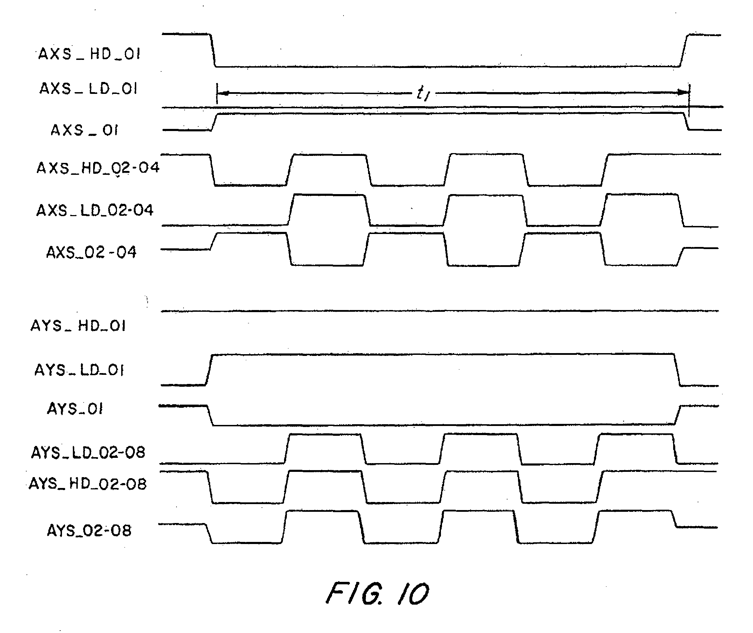

Fig. 10 illustrates the pulse waveforms utilized when it is desired to set switch $S_{27}$, i.e. close cantilevers 23, 24. As may be seen AXS_01 rises to a constant positive voltage level for a time interval $t_1$, which may be for example, 200 microseconds. At the same time AYS_01 drops to a constant negative voltage level over the same interval $t_1$. The other "X" drive signals AXS_02, AXS_03 and AXS_04 are pulsed with a periodic pulse train which alternates between a positive and a negative voltage level. The other "Y" drive signals AYS_02... AYS-08 are driven with a pulse train which may be the same as, but opposite in polarity, to that driving AXS_02 - 04.

In this manner, only switch $S_{27}$ is provided with the energy necessary to activate or "close" it, while the pulse modulated energy prevents false triggering of other switching devices in the array. As may be appreciated, three other switches in $S_{25}$, $S_{29}$, $S_{31}$ in the 32 switch array of Figs. 5 and 6 are driven by the output AYS_01 of the driver circuit shown in Fig. 8. However, each of these other switches receives a respective one of the modulated "X" drive signals AXS_02, AXS_03 and AXS_04, which prevents triggering of these three switches $S_{25}$, $S_{29}$, $S_{31}$.

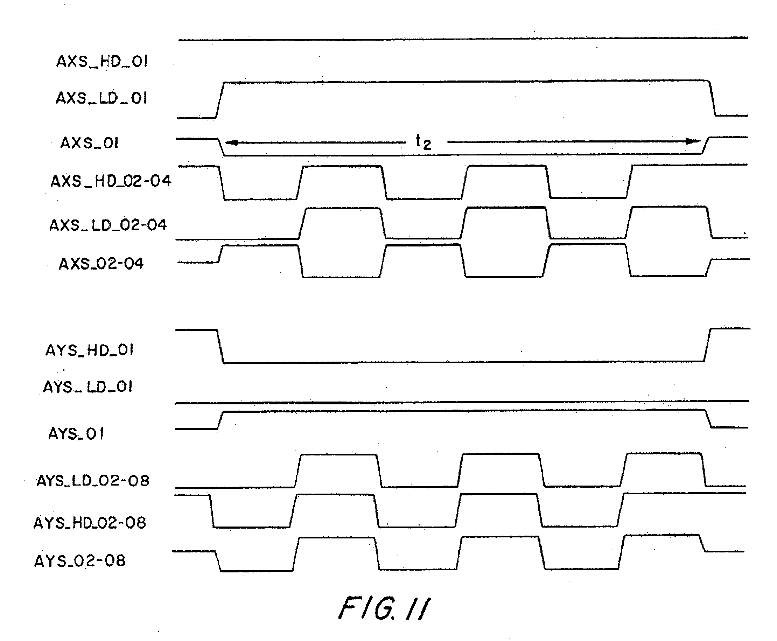

To clear or reset switch $S_{27}$, the energy waveforms depicted in Fig. 11 are used. In this case, AXS_01 comprises a negative pulse of duration $t_2$, while AYS_01 comprises a positive pulse of duration $t_2$. The waveforms for AXS_02 - 04 and AYS_02 -08 are the same as those of Fig. 10; thus achieving the resetting of switch $S_{27}$ without false triggering of other switches in the array.

With respect to switch $S_{27}$, the pulse interval and voltage level supplied by AXS_01 and AYS_01 may be those typically necessary to close the switch. Such levels and durations will typically vary depending on the type of switch used, e.g. MEMS switches or electromechanical relays or solenoids. Additionally, the voltage levels and duty cycle of the pulse modulated waveforms, e.g. AXS_02, AXS_03, AXS_04 in Fig. 10, will vary with the application, but are selected in each application to be sufficient to prevent false triggering of other devices in the array. Waveforms analogous to those shown in Figs. 10 and 11 are used to set and reset any specific one of the other switches in the 32 switch array. With respect to the array of Figs. 5 and 6, it may be observed that such an array would conventionally require 4x8+4 (N●M+N) = 36 drivers, whereas the illustrative embodiment employs 12 drivers.

Methods according to the illustrative embodiments are effective in addressing EM device arrays that are symmetric (N=M), asymmetric (N>M or N<M), or asymmetric plus non orthogonal (an array composed of multi asymmetric sub arrays with various N or M segments).

Those skilled in the art will appreciate that various adaptations and modifications of the just described preferred embodiment can be configured. Therefore, it is to be understood that, within the scope of the appended claims, the invention may be practiced other than as specifically described herein.

**Claims**

1.    A switching array comprising:

   (a) a plurality of three stage switching arrays (Node I ... Node Q); and
   (b) an expansion switching array (21), wherein a second stage (B) of each of the three stage switching arrays (Node 1 ... Node Q) includes an expansion section comprising switches which facilitate interconnection of each three stage array (Node I ... Node Q) to the expansion switching array (21);

(c) wherein each of the plurality of three stage switching arrays (Node 1 ... Node Q) comprises a first stage array (A) having N inputs and K outputs and a third stage array (C) having K inputs and N outputs, each second stage array (B) of each three stage switching array (Node I ... Node Q) receiving M local inputs from the first stage array (A) and providing M local outputs to the third stage switching array (C), each second stage switching array (B) further providing P outputs to the expansion array (21) and receiving P inputs from the expansion array (21), where K, N, M and P are integers; and

(d) wherein the switching array comprises a plurality of nodes and wherein, in each node, there are K second stage arrays (B), M first stage arrays (A), and M third stage arrays (C), and wherein the number of expansion switching arrays in the expansion array (21) is equal to $K \times P$.

2. The switching array of claim 1:

wherein the expansion section of each second stage array (B) of each three stage switching array (Node 1 ... Node Q) includes a plurality of expansion outputs, each connected as an input to a respective expansion switching array (21) and wherein each respective expansion switching array (21) provides a plurality of expansion outputs, each connected as an input back to a respective second stage switching array (B).

3. The switching array of claim 1 or 2 wherein each expansion switching array (21) is a square array (D) having Q inputs and Q outputs, where Q is an integer.

4. The switching array of claim 1 or 2 wherein the expansion array (21) comprises a single column of square switching arrays (D).

5. The switching array of claim 1 or 2 wherein the expansion array (21) includes a plurality of square arrays (D), each having Q inputs and Q outputs and wherein the second stages (B) of the three stage arrays (Node I ... Node Q) each include 1... M+1 ... M+P vertical stages which connect to the square arrays of the expansion array (21).

6. The switching array of claim 4 wherein each square array has Q inputs and Q outputs and wherein the second stages of the three stage arrays each include 1 ... M+1... M+P vertical stages which connect to the square arrays of the expansion array.

**Patentansprüche**

1. Schaltanordnung mit:

(a) mehreren Dreistufen-Schaltanordnungen (Knoten 1 ... Knoten Q); und

(b) einer Erweiterungs-Schaltanordnung (21), wobei eine zweite Stufe (B) von jeder der Dreistufen-Schaltanordnungen (Knoten 1 ... Knoten Q) einen Erweiterungteil mit mehreren Schaltern aufweist, welche die gegenseitige Verbindung der Dreistufenanordnung (Knoten 1 ... Knoten Q) mit der Erweiterungs-Schaltanordnung (21) ermöglichen;

(c) wobei jede von den mehreren Dreistufen-Schaltanordnungen (Knoten 1 ... Knoten Q) eine erste Stufenanordnung (A), die N Eingänge und K Ausgänge aufweist, und eine dritte Stufenanordnung (C) umfasst, die K Eingänge und N Ausgänge aufweist, wobei jede zweite Stufenanordnung (B) von jeder Dreistufen-Schaltanordnung (Knoten 1 ... Knoten Q) M lokale Eingänge von der ersten Stufenanordnung (A) aufnimmt und der dritten Stufen-Schaltordnung (C) M lokale Ausgänge bereitstellt, wobei jede zweite Stufen-Schaltanordnung (B) ferner der Erweiterungsanordnung (21) P Ausgänge bereitstellt und P Eingänge von der Erweiterungsanordnung (21) aufnimmt, wobei K, N, M und P ganze Zahlen sind; und

(d) wobei die Schaltanordnung mehrere Knoten aufweist und wobei es in jedem Knoten K zweite Stufenanordnungen (B), M erste Stufenanordnungen (A) und M dritte Stufenanordnungen (C) gibt und wobei die Anzahl der Erweiterungs-Schaltanordnungen in der Erweiterungsanordnung (21) gleich $K \times P$ ist.

2. Schaltanordnung nach Anspruch 1:

wobei der Erweiterungsteil jeder zweiten Stufenanordnung (B) von jeder Dreistufen-Schaltanordnung (Knoten 1 ... Knoten Q) mehrere Erweiterungsausgänge aufweist, von denen jeder als ein Eingang mit einer zugehörigen Erweiterungs-Schaltanordnung (21) verbunden ist und wobei jede zugehörige Erweiterungs-Schaltanordnung (21) mehrere Erweiterungsausgänge bereitstellt, wobei jeder als ein Eingang zurück mit einer zugehörigen zweiten Stufenanordnung (B) verbundenen ist.

3. Schaltanordnung nach Anspruch 1 oder 2, wobei jede Erweiterungs-Schaltanordnung (21) eine Quadratanordnung (D) ist, die Q Eingänge und Q Ausgänge aufweist, wobei Q eine ganze Zahl ist.

4. Schaltanordnung nach Anspruch 1 oder 2, wobei die Erweiterungsanordnung (21) eine einzige Spalte von Quadrat-Schaltanordnungen (D) aufweist.

5. Schaltanordnung nach Anspruch 1 oder 2, wobei die Erweiterungsanordnung (21) mehrere Quadratanordnungen (D) umfasst, von denen jede Q Eingänge und Q Ausgänge aufweist und wobei die zweiten Stufen (B) der Dreistufenanordnungen (Knoten 1 ... Knoten Q) jeweils 1 ... M+1 ... M+P vertikale Stufen umfassen, die mit den Quadratanordnungen der Erweiterungsanordnung (21) verbunden sind.

6. Schaltanordnung nach Anspruch 4, wobei jede Quadratanordnung Q Eingänge und Q Ausgänge aufweist und wobei die zweiten Stufen der Dreistufenanordnungen jeweils 1 ... M+1 ... M+P vertikale Stufen umfassen, die mit den Quadratanordnungen der Erweiterungsanordnung verbunden sind.

**Revendications**

1. Réseau de commutation, comprenant :

   (a) une pluralité de réseaux de commutation de trois étages (Noeud 1 ... Noeud Q) ; et
   (b) un réseau de commutation d'extension (21), dans lequel un deuxième étage (B) de chacun des réseaux de commutation de trois étages (Noeud 1 ... Noeud Q) comprend une section d'extension comprenant des commutateurs qui facilitent l'interconnexion de chaque réseau de trois étages (Noeud 1 ... Noeud Q) au réseau de commutation d'extension (21) ;
   (c) dans lequel chacun parmi la pluralité de réseaux de commutation de trois étages (Noeud 1 ... Noeud Q) comprend un réseau de premier étage (A) comportant N entrées et K sorties et un réseau de troisième étage (C) comportant K entrées et N sorties, chaque réseau de deuxième étage (B) de chaque réseau de commutation de trois étages (Noeud 1 ... Noeud Q) recevant M entrées locales à partir du réseau de premier étage (A) et fournissant M sorties locales au réseau de commutation de troisième étage (C), chaque réseau de commutation de deuxième étage (B) fournissant en outre P sorties au réseau d'extension (21) et recevant P entrées à partir du réseau d'extension (21), où K, N, M et P sont des nombres entiers relatifs ; et
   (d) dans lequel le réseau de commutation comprend une pluralité de noeuds et dans lequel, dans chaque noeud, il y a K réseaux de deuxième étage (B), M réseaux de premier étage (A), et M réseaux de troisième étage (C), et dans lequel le nombre de réseaux de commutation d'extension dans le réseau d'extension (21) est égal à K × P.

2. Réseau de commutation selon la revendication 1 :

   dans lequel la section d'extension de chaque réseau de deuxième étage (B) de chaque réseau de commutation de trois étages (Noeud 1 ... (Noeud Q) comprend une pluralité de sorties d'extension, chacune connectée sous forme d'entrée à un réseau de commutation d'extension respectif (21) et dans lequel chaque réseau de commutation d'extension respectif (21) fournit une pluralité de sorties d'extension, chacune connectée sous forme d'entrée de retour à un réseau de commutation de deuxième étage respectif (B).

3. Réseau de commutation selon la revendication 1 ou 2, dans lequel chaque réseau de commutation d'extension (21) est un réseau carré (D) comportant Q entrées et Q sorties, où Q est un nombre entier relatif.

4. Réseau de commutation selon la revendication 1 ou 2, dans lequel le réseau d'extension (21) comprend une seule colonne de réseaux de commutation carrés (D).

5. Réseau de commutation selon la revendication 1 ou 2, dans lequel le réseau d'extension (21) comprend une pluralité de réseaux carrés (D), chacun comportant Q entrées et Q sorties et dans lequel les deuxièmes étages (B) des réseaux de trois étages (Noeud 1 ... (Noeud Q) comprennent chacun 1... M+1... M+P étages verticaux qui se connectent aux réseaux carrés du réseau d'extension (21).

6. Réseau de commutation selon la revendication 4, dans lequel chaque réseau carré comporte Q entrées et Q sorties et dans lequel les deuxièmes étages des réseaux de trois étages comprennent chacun 1... M+1... M+P étages verticaux qui se connectent aux réseaux carrés du réseau d'extension.

FIG. 1

EXPANSION ARRAY

11

NODE 0

NODE 1

NODE Q

15

17

21

FIG. 2

FIG. 3

```
┌─────────────────┐
│   ESTABLISH     │
│   SWITCHING     │──── 101
│    SYSTEM       │
│  ARCHITECTURE   │
└─────────────────┘
        │
        ▼
┌─────────────────┐
│    GENERATE     │
│   AND STORE     │──── 103
│  SWITCH SET     │
│     ARRAY       │
│     "55"        │
└─────────────────┘
        │
        ▼
┌─────────────────┐
│    ACCESS       │
│   SET OF ALL    │──── 105
│   POSSIBLE      │
│   SWITCHES      │
└─────────────────┘
        │
        ▼
┌─────────────────┐
│    SELECT       │
│  PARTICULAR     │──── 107
│  SWITCH SET     │
└─────────────────┘
```

## FIG. 4

FIG 5

FIG. 6

FIG. 7

FIG. 8

FIG. 9

AXS_HD_0I

AXS_LD_0I

AXS_0I

$t_1$

AXS_HD_02-04

AXS_LD_02-04

AXS_02-04

AYS_HD_0I

AYS_LD_0I

AYS_0I

AYS_LD_02-08

AYS_HD_02-08

AYS_02-08

FIG. 10

FIG. II

AXS_HD_OI
AXS_LD_OI
AXS_OI
AXS_HD_02-04
AXS_LD_02-04
AXS_02-04

AYS_HD_OI
AYS_LD_OI
AYS_OI
AYS_LD_02-08
AYS_HD_02-08
AYS_02-08

$t_2$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOHN KIM et al.** *Adaptive Routing in High-Radix Clos Network,* November 2006